# EUROPÄISCHE PATENTSCHRIFT

(11) **EP 2 444 228 B1**
(45) Veröffentlichungstag und Bekanntmachung des Hinweises auf die Patenterteilung: **12.07.2017**
(21) Anmeldenummer: 10188551.5
(22) Anmeldetag: 22.10.2010
(51) Int. Cl.: B29C 47/08, B29C 47/66, B29C 47/82, B29C 45/74

(54) **Mehrwellenextruder mit Wärmedämmhaube**
Multiple screw extruder wit heat insulating housing
Extrudeuse à vis multiples avec boîtier d'isolation thermique

(43) Veröffentlichungstag der Anmeldung: 25.04.2012
(73) Patentinhaber: Coperion GmbH, 70469 Stuttgart (DE)
(72) Erfinder: Weller, Ulrich, 74523 Schwäbisch Hall (DE); Bertuccioli, Daniele, 71282 Hemmingen (DE)
(74) Vertreter: Rau, Schneck & Hübner Patentanwälte Rechtsanwälte PartGmbB

(56) Entgegenhaltungen:
- WO-A1-97/18940
- WO-A2-2008/155650
- DE-U1- 8 813 611
- JP-A- 7 266 405
- JP-A- 2009 292 103
- US-A- 4 035 127
- US-A- 5 549 383
- US-A- 5 667 299

## Beschreibung

Die Erfindung betrifft einen Mehrwellen-Extruder zur Behandlung von Kunststoffmaterial.

Aus der Veröffentlichung "Wärmedämmhauben für beheizte Schneckengehäuse" (Kundeninformation der Werner & Pfleiderer GmbH, 10/1992) ist eine einteilige Wärmedämmhaube für einen Gehäuseabschnitt eines Extruders bekannt, die im Querschnitt U-förmig ausgebildet ist und auf den Gehäuseabschnitt aufgesetzt und mittels Schnellverbindern befestigt wird. Die Wärmedämmhaube weist ein Dämmmaterial auf, das zur Wärmedämmung und Energieeinsparung dient und von einer Stahlummantelung umgeben ist. Nachteilig bei dieser Wärmedämmhaube ist, dass diese individuell für den jeweiligen Gehäuseabschnitt angefertigt werden muss, da jeder Gehäuseabschnitt in Abhängigkeit der Funktion des Extruders in diesem Bereich unterschiedlich ausgebildet bzw. konfiguriert ist. Um eine Wärmedämmhaube für mehrere unterschiedliche Gehäuseabschnitte einsetzen zu können, müssen bestimmte Teilbereiche der Wärmedämmhaube offen bzw. ungedämmt bleiben, sodass ein unnötiger Energieverlust entsteht.

Aus der JP 2009 292 103 A1 ist ein Einwellen-Extruder mit mehreren zweiteiligen Wärmedämmhauben bekannt. Die Wärmedämmhaubenteile sind lösbar miteinander verbunden und bilden jeweils ein Seitenteil und ein Oberteil aus. Die Wärmedämmhauben sind an jeweils zwei Gehäuseabschnitten des Einwellen-Extruders angeordnet. Jedes der Wärmedämmhaubenteile ist individuell an die zugehörigen Gehäuseabschnitte angepasst, sodass keines der Wärmedämmhaubenteile als Modul mehrfach verwendbar ist.

Aus der US 4 035 172 A ist ein Extruder mit einer zweiteiligen Wärmedämmhaube bekannt, die das gesamte Gehäuse des Extruders dämmt.

Aus der DE 88 13 611 U1 ist ein Einschneckenextruder mit einem zylinderförmigen Gehäuse bekannt. An dem Gehäuse ist ein wärmedämmendes Schutzgehäuse aus zwei Halbschalen angeordnet.

Aus der JP 7 266 405 A ist ein Mehrwellen-Extruder bekannt, dessen Gehäuse aus mehreren mit Stangen miteinander verspannten Gehäuseabschnitten aufgebaut ist. An den Gehäuseabschnitten sind plattenförmige Heizelemente angeordnet.

Aus der WO 2008/155 650 A2 ist ein Extruder bekannt, bei dem in einem Zwischenraum zwischen zwei Körpern mit unterschiedlicher Temperatur ein plattenförmiges Isoliermaterial angeordnet ist.

Aus der US 5 667 299 A ist ein aus mehreren Gehäuseabschnitten aufgebauter Extruder bekannt. An den Gehäuseabschnitten sind plattenförmige Heizelemente angeordnet.

Aus der US 5 549 383 A ist ein aus mehreren Gehäuseabschnitten aufgebauter Extruder bekannt. An den Gehäuseabschnitten sind plattenförmige Heizelemente angeordnet.

Aus der WO 97/18940 A1 ist ein Extrudergehäuse mit einem verschleißfesten Kern und einem diesen umgebenden Mantel bekannt. Der Mantel liegt eng gegen den Kern an, so dass ein guter Wärmeübergang erzielt wird.

Der Erfindung liegt die Aufgabe zugrunde, einen Mehrwellen-Extruder zu schaffen, der in einfacher und flexibler Weise aufgrund der Wärmedämmung eine hohe Energieeffizienz und Wirtschaftlichkeit aufweist.

Diese Aufgabe wird durch einen Mehrwellen-Extruder mit den Merkmalen des Anspruchs 1 gelöst. Dadurch, dass die Wärmedämmhauben jeweils als modularer Bausatz ausgebildet sind und das mindestens eine separate Oberteil und das mindestens eine separate Seitenteil zu der jeweiligen Wärmedämmhaube zusammengebaut werden, sind diese in einfacher Weise und flexibel an unterschiedliche Gehäuseabschnitte anpassbar. Die Wärmedämmhauben stellen somit für beliebige Gehäuseabschnitte eine optimale Wärmedämmung bereit, sodass kein unnötiger Energieverlust aufgrund von nicht gedämmten Teilbereichen entsteht. Zur Wärmedämmung des jeweiligen zu dämmenden Gehäuseabschnitts werden mindestens ein geeignetes Oberteil und mindestens ein geeignetes Seitenteil lösbar aneinander und an dem Gehäuseabschnitt angeordnet. Durch den modularen Aufbau der Wärmedämmhaube ist eine geringe Anzahl an unterschiedlichen Oberteilen und unterschiedlichen Seitenteilen ausreichend, um eine Vielzahl unterschiedlicher Wärmedämmhauben zusammenzubauen. Durch den modularen Aufbau muss die jeweilige Wärmedämmhaube zudem nicht auf den zu dämmenden Gehäuseabschnitt aufgesetzt werden, sodass eine Wärmedämmung an allen zu dämmenden Wänden des Gehäuseabschnitts möglich ist. Der Mehrwellen-Extruder weist somit aufgrund der Wärmedämmung eine hohe Energieeffizienz und Wirtschaftlichkeit auf.

Ein Mehrwellen-Extruder nach Anspruch 2 ermöglicht auf einfache Weise die Wärmedämmung der unteren Wand des Gehäuseabschnitts. Dadurch, dass der Seitenabschnitt und der zugehörige Bodenabschnitt einteilig ausgebildet sind, ist eine einfache Montage und ein einfacher Zusammenbau der Wärmedämmhaube gewährleistet.

Ein Mehrwellen-Extruder nach Anspruch 3 oder 4 ermöglicht auf einfache Weise die Wärmedämmung der Flansche sowie des dazwischen liegenden Bereichs des Gehäuseabschnitts.

Ein Mehrwellen-Extruder nach Anspruch 5 ermöglicht eine einfache Montage des mindestens einen Seitenteils an dem Gehäuseabschnitt. In dem Gehäuseabschnitt sind seitlich Gewindebohrungen angeordnet, in die Befestigungsmittel in Form von Gewindestangen eingeschraubt sind. Das zu befestigende Seitenteil wird mit den ersten Durchführungsöffnungen auf die Gewindestangen gesteckt und mittels Muttern befestigt. Vorzugsweise werden die ersten Durchführungsöffnungen durch Metallhülsen gebildet, durch diese die Gewindestangen im befestigten Zustand des Seitenteils geführt sind. Die Metallhülsen erleichtern die Montage des Seitenteils und gewährleisten dessen sichere Befestigung an dem Gehäuseabschnitt. Die Metallhülsen sind mit der Metallummantelung des Seitenteils fest verbunden, beispielsweise verschweißt.

Ein Mehrwellen-Extruder nach Anspruch 6 gewährleistet eine flexible Anpassung des mindestens einen Seitenteils zur Durchführung von Heizpatronen. Die zweiten Durchführungsöffnungen werden vorzugsweise durch Metallhülsen gebildet, die mit einer Metallummantelung des Seitenteils verbunden, beispielsweise verschweißt sind. Die Metallhülsen erleichtern das Durchführen der Heizpatronen.

Ein Mehrwellen-Extruder nach Anspruch 7 gewährleistet eine flexible Anpassung des mindestens einen Oberteils an den zu dämmenden Gehäuseabschnitt. Dadurch, dass das mindestens eine Oberteil eine dritte Durchführungsöffnung aufweist, können unterschiedliche Extruderbauteile durch die Wärmedämmhaube geführt werden. Derartige Extruderbauteile sind beispielsweise Temperatursensoren, Einspritzdüsen, Materialzuführungen, Entgasungsdome oder Spritzköpfe. Die Durchführungsöffnung kann beispielsweise in einem Oberteil ausgebildet sein, sodass dieses die Durchführungsöffnung in allen Richtungen seitlich begrenzt. Weiterhin kann die Durchführungsöffnung randseitig in einem Oberteil ausgebildet sein, sodass dieses die Durchführungsöffnung nach drei Seiten seitlich begrenzt. Je nach Bedarf kann die Durchführungsöffnung auch durch zwei Oberteile ausgebildet werden, die zusammen die Durchführungsöffnung nach drei Seiten bzw. nach allen Seiten seitlich begrenzen.

Ein Mehrwellen-Extruder nach Anspruch 8 verbessert die Wärmedämmwirkung und reduziert somit den Energieverlust. Durch die Ausbildung eines Luftspalts zwischen dem mindestens einen Seitenteil und dem Gehäuseabschnitt wird eine zusätzliche Isolierschicht geschaffen, wodurch die Wärmedämmwirkung verbessert wird. Der Abstand zwischen dem mindestens einen Seitenteil und dem Gehäuseabschnitt ist durch den Abstandshalter voreinstellbar. Vorzugsweise bilden mehrere der Metallhülsen den Abstandshalter aus, indem diese über die Innenseite des Seitenteils überstehen. Weiterhin kann auch ein Luftspalt zwischen dem mindestens einen Oberteil und dem Gehäuseabschnitt ausgebildet sein. Hierzu dienen beispielsweise die als Auflagefläche vorgesehenen Seitenteile als Abstandshalter. Weiterhin kann an der Innenseite des Oberteils ein Abstandshalter angeordnet sein.

Ein Mehrwellen-Extruder nach Anspruch 9 gewährleistet eine einfach lösbare Fixierung des mindestens einen Oberteils an dem mindestens einen Seitenteil.

Ein Mehrwellen-Extruder nach Anspruch 10 stellt eine dauerhafte Wärmedämmung sicher, da das Dämmmaterial durch die Metallummantelung vor Umwelteinflüssen geschützt ist.

Ein Mehrwellen-Extruder nach Anspruch 11 gewährleistet eine flexible Anpassung an den zu dämmenden Gehäuseabschnitt. Die Metallummantelung des mindestens einen Seitenteils und/oder des mindestens einen Oberteils ist im Bereich von vorgesehenen Durchführungsöffnungen derart ausgebildet, dass ein der Durchführungsöffnung entsprechender Teilbereich der Metallummantelung herausbrechbar ist. Hierzu ist die Metallummantelung bzw. das die Metallummantelung bildende Blech beispielsweise mittels eines Lasers auf der Außenseite vorgearbeitet, sodass das Blech zur Ausbildung der Durchführungsöffnung leicht herausbrechbar ist. Das darunter liegende Dämmmaterial kann im Bereich der Durchführungsöffnungen ebenfalls leicht entfernt werden oder ist im Bereich der Durchführungsöffnung bereits ausgespart.

Ein Mehrwellenextruder nach Anspruch 12 gewährleistet auf einfache und flexible Weise eine optimale Wärmedämmung.

Weitere Merkmale, Vorteile und Einzelheiten der Erfindung ergeben sich aus der nachfolgenden Beschreibung mehrerer Ausführungsbeispiele. Es zeigen:

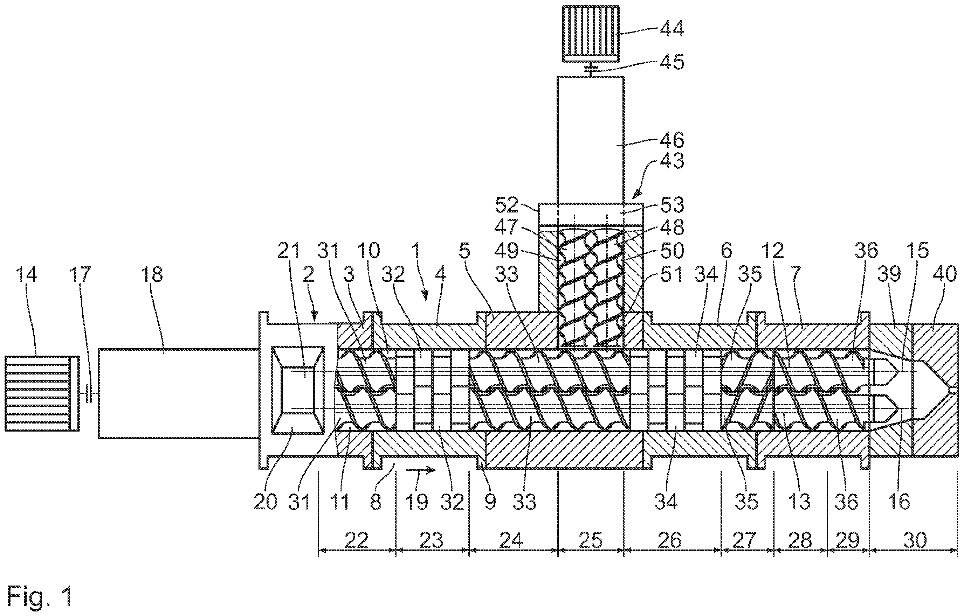

- Fig. 1: eine Draufsicht auf einen Extruder in teilweise aufgebrochener Darstellung,

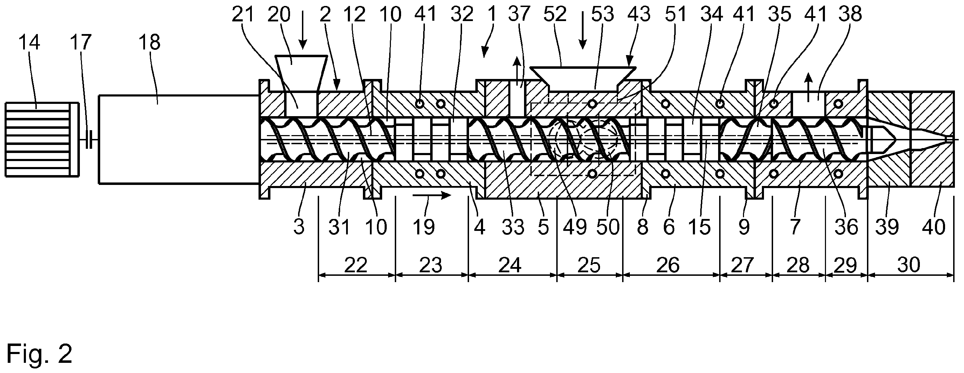

- Fig. 2: eine Seitenansicht des Extruders in Fig. 1 in teilweise aufgebrochener Darstellung,
- Fig. 3: eine perspektivische Ansicht einer Wärmedämmhaube gemäß einem ersten Ausführungsbeispiel mit einem zu dämmenden Gehäuseabschnitt des Extruders in Fig. 2,
- Fig. 4: einen Schnitt durch die Wärmedämmhaube und den Gehäuseabschnitt in Fig. 3 entlang der Schnittlinie IV-IV,
- Fig. 5: eine perspektivische Ansicht der Wärmedämmhaube in Fig. 3 ohne den Gehäuseabschnitt,
- Fig. 6: eine perspektivische Ansicht eines Seitenteils der Wärmedämmhaube in Fig. 5,
- Fig. 7: einen Schnitt durch das Seitenteil in Fig. 6 entlang der Schnittlinie VII-VII,
- Fig. 8: eine perspektivische Untersicht eines Oberteils der Wärmedämmhaube in Fig. 5,
- Fig. 9: eine perspektivische Ansicht einer Wärmedämmhaube gemäß einem zweiten Ausführungsbeispiel mit einem zu dämmenden Gehäuseabschnitt,
- Fig. 10: einen Schnitt durch die Wärmedämmhaube in Fig. 9 entlang der Schnittlinie X-X,
- Fig. 11: eine perspektivische Ansicht der Wärmedämmhaube in Fig. 9 ohne den Gehäuseabschnitt,
- Fig. 12: eine perspektivische Ansicht einer Wärmedämmhaube gemäß einem dritten Ausführungsbeispiel mit einem zu dämmenden Gehäuseabschnitt, und
- Fig. 13: eine perspektivische Ansicht der Wärmedämmhaube in Fig. 12 ohne den Gehäuseabschnitt.

Ein Mehrwellen-Extruder 1 weist ein Gehäuse 2 aus mehreren hintereinander angeordneten und als Gehäuseschüssen bezeichneten Gehäuseabschnitten 3 bis 7 auf. Die Gehäuseabschnitte 3, 4, 6 und 7 weisen an ihren Enden jeweils Flansche 8, 9 auf, über die die benachbarten Gehäuseabschnitte 3 und 4 sowie 6 und 7 miteinander verbunden sind. Demgegenüber weist der Gehäuseabschnitt 5 Abmessungen auf, die den Flanschen 8 und 9 der benachbarten Gehäuseabschnitte 4 und 6 entsprechen, sodass der Gehäuseabschnitt 5 unmittelbar mit den Flanschen 8, 9 der benachbarten Gehäuseabschnitte 4, 6 verbunden ist.

Im Gehäuse 2 sind zwei zueinander parallele und einander durchdringende Gehäusebohrungen 10, 11 ausgebildet, die im Querschnitt die Form einer liegenden Acht haben. In den Gehäusebohrungen 10, 11 sind konzentrisch zwei Wellen 12, 13 angeordnet, die von einem Antriebsmotor 14 um zugehörige Drehachsen 15, 16 gleichsinnig drehantreibbar sind. Zwischen dem Antriebsmotor 14 und den Wellen 12, 13 sind eine Kupplung 17 und ein Verzweigungsgetriebe 18 angeordnet.

Der Extruder 1 weist einen in einer Förderrichtung 19 nach dem Verzweigungsgetriebe 18 angeordneten Zuführtrichter 20 auf, mittels dem durch eine in dem ersten Gehäuseabschnitt 3 ausgebildete Zuführöffnung 21 aufzubereitendes Kunststoffmaterial in die Gehäusebohrungen 10, 11 zuführbar ist. Ausgehend von der Zuführöffnung 21 weist der Extruder 1 in Förderrichtung 19 eine Einzugszone 22, eine Aufschmelzzone 23, eine erste Entgasungszone 24, eine Zuführzone 25, eine Einmischzone 26, eine Rückstauzone 27, eine zweite Entgasungszone 28, eine Druckaufbauzone 29 und eine Austragszone 30 auf.

In der Einzugszone 22 sind als Behandlungselemente erste Schneckenelemente 31 auf den Wellen 12, 13 drehfest angeordnet, die ineinander greifen, also dicht kämmend ausgebildet sind. In der Aufschmelzzone 23 sind auf den Wellen 12, 13 als Behandlungselemente erste Knetelemente 32 drehfest angeordnet, die ebenfalls dicht kämmend ausgebildet sind. In entsprechender Weise sind in der Entgasungszone 24 und der Zuführzone 25 zweite Schneckenelemente 33, in der Einmischzone 26 zweite Knetelemente 34, in der Rückstauzone 27 Stauelemente 35 und in der Entgasungszone 28 sowie in der Druckaufbauzone 29 wiederum dritte Schneckenelemente 36 drehfest auf den Wellen 12, 13 angeordnet. Aus der ersten Entgasungszone 24 mündet eine erste Entgasungsöffnung 37 aus, die in dem dritten Gehäuseabschnitt 5 ausgebildet ist und wodurch das Kunststoffmaterial gegen Atmosphärendruck entgast wird. Entsprechend mündet aus der zweiten Entgasungszone 28 eine zweite Entgasungsöffnung 38 aus, die in dem letzten Gehäuseabschnitt 7 ausgebildet ist und wodurch das Kunststoffmaterial gegen Vakuum entgast wird. Die Austragszone 30 wird durch zwei Düsenplatten 39, 40 gebildet, die das Gehäuse 2 abschließen. Zur Beheizung des Gehäuses 2 weisen die Gehäuseabschnitte 4 bis 7 jeweils mehrere quer zu den Achsen 15, 16 verlaufende Heizbohrungen 41 auf, in die nicht näher dargestellte Heizpatronen von elektrischen Heizeinheiten 42 einführbar sind.

In der Zuführzone 25 mündet eine Beschickungsschneckenmaschine 43 radial zu den Achsen 15, 16 in die Gehäusebohrung 10 ein. Diese weist einen Antriebsmotor 44 auf, der über eine Kupplung 45 mit einem Getriebe 46 gekoppelt ist. Mittels des Getriebes 46 sind zwei dicht miteinander kämmende Förderschnecken 47, 48 gleichsinnig drehantreibbar. Die Förderschnecken 47, 48 sind ebenfalls in einander durchdringenden Gehäusebohrungen 49, 50 angeordnet, die im Querschnitt die Form einer liegenden Acht haben. Die Förderschnecken 47, 48 münden durch eine Zuführöffnung 51, die in dem dritten Gehäuseabschnitt 5 ausgebildet ist, in die Gehäusebohrung 10 ein und reichen bis in die Nähe der Schneckenelemente 33. Benachbart zu dem Getriebe 46 ist ein Zuführtrichter 52 angeordnet, der über eine Zuführöffnung 53 in die Gehäusebohrungen 49, 50 mündet. Über die Beschickungsschneckenmaschine 43 kann beispielsweise ein Füllstoff dem aufzubereitenden Kunststoffmaterial zugegeben werden.

Die Gehäuseabschnitte 3 bis 7 sind durch modular aufgebaute Wärmedämmhauben wärmegedämmt. Die Wärmedämmhauben werden nachfolgend im Einzelnen mit 54, 54a und 54b bezeichnet.

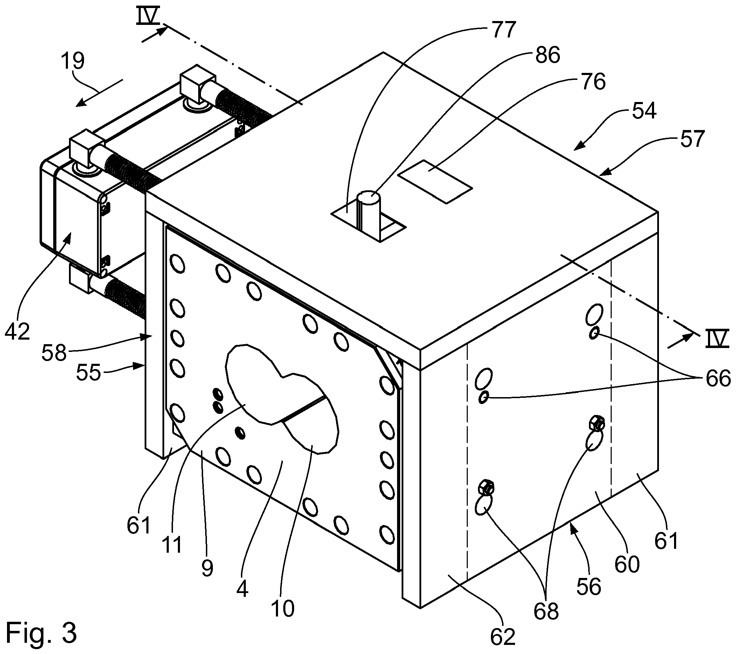

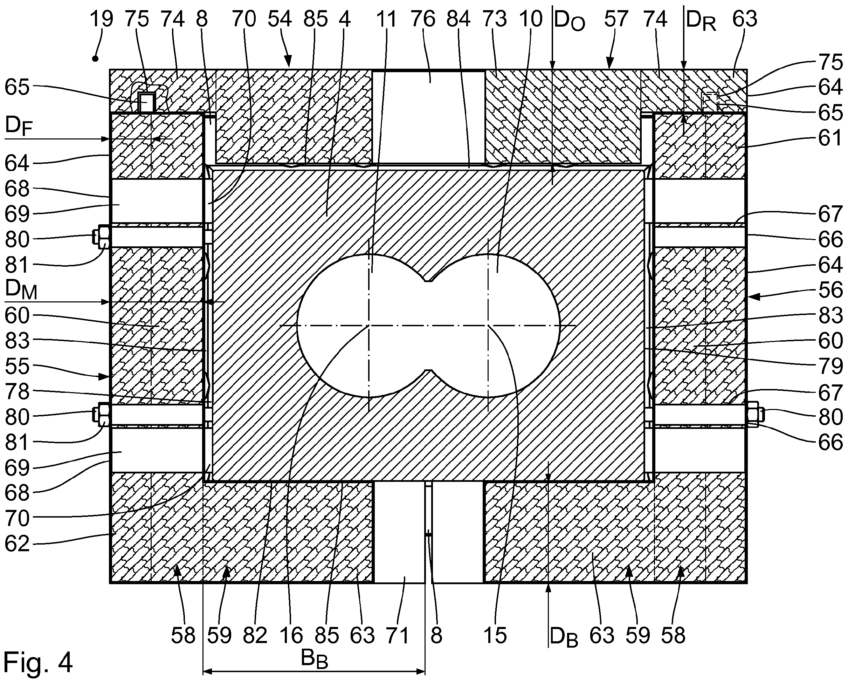

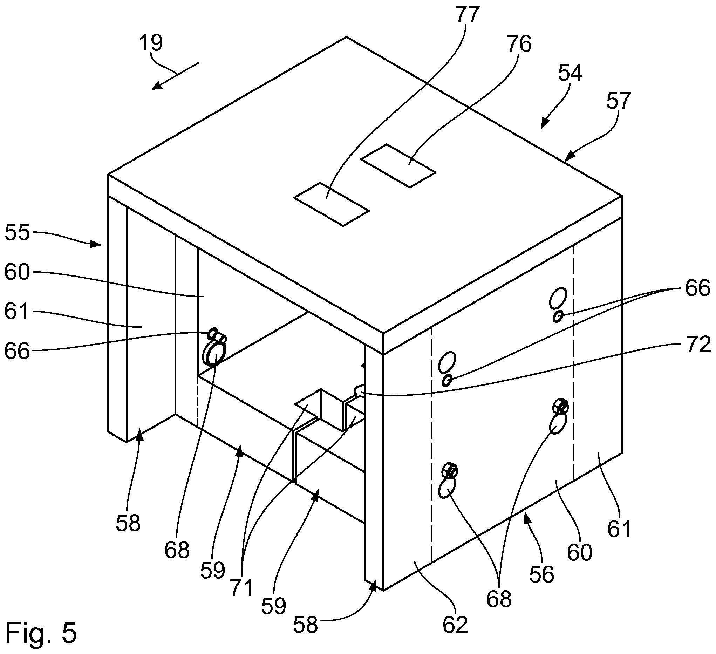

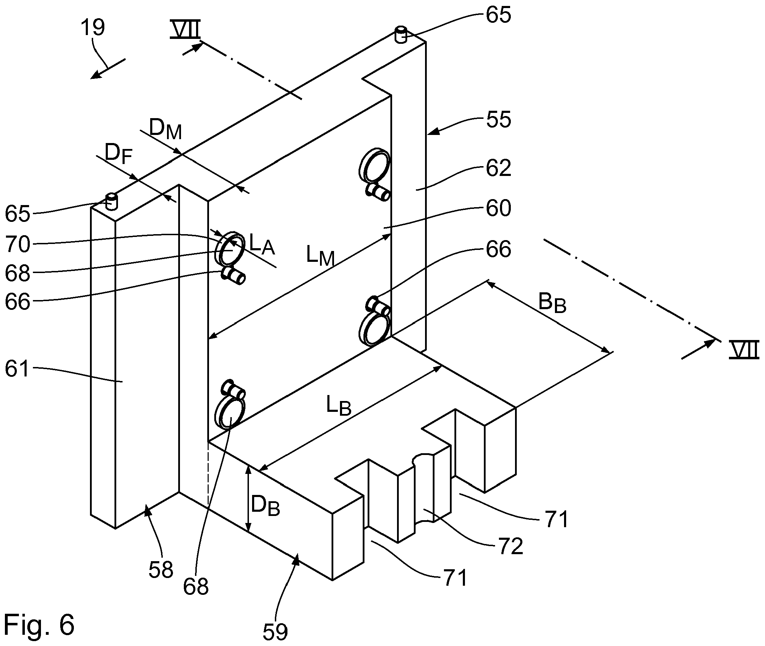

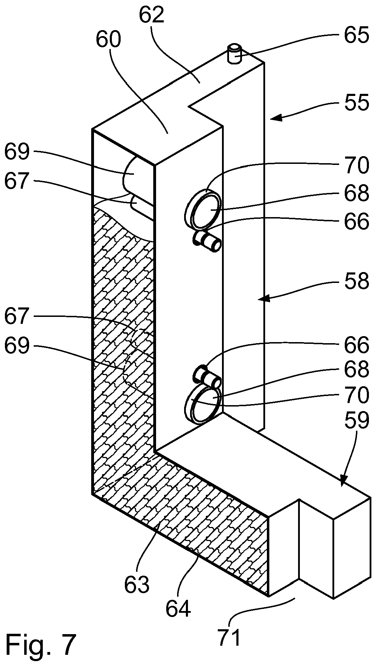

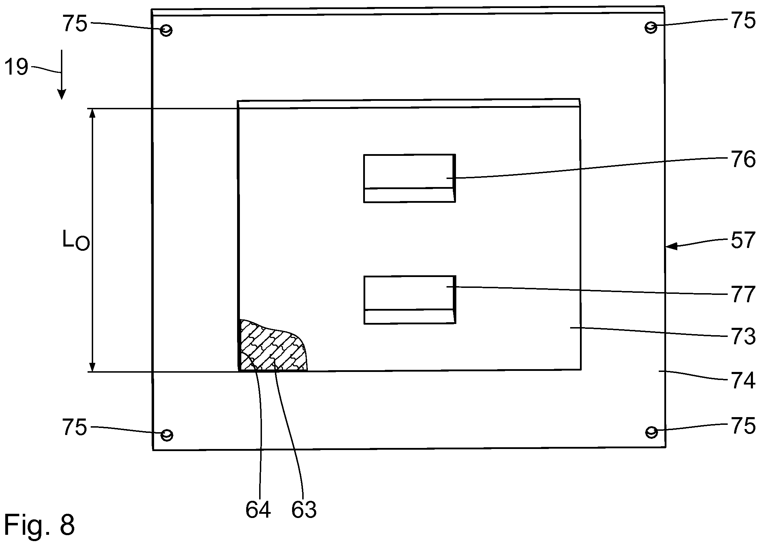

Nachfolgend ist anhand der Fig. 3 bis 8 eine erste erfindungsgemäße Wärmedämmhaube 54 beschrieben, die zur Wärmedämmung der Gehäuseabschnitte 4 und 6 dient. Die Wärmedämmhaube 54 weist zwei baugleich ausgebildete Seitenteile 55, 56 und ein zugehöriges Oberteil 57 auf. Die Seitenteile 55, 56 sind im Querschnitt L-förmig ausgebildet und weisen jeweils einen Seitenabschnitt 58 und einen einteilig daran sowie senkrecht dazu ausgebildeten Bodenabschnitt 59 auf. Die Seitenabschnitte 58 der Seitenteile 55, 56 weisen wiederum jeweils einen Mittelabschnitt 60 und beidseitig davon angeordnete Flanschabschnitte 61, 62 auf. Der Mittelabschnitt 60 weist eine Dicke D_{M} auf, die im Vergleich zu einer Dicke D_{F} der Flanschabschnitte 61, 62 größer ist. Weiterhin weist der Mittelabschnitt 60 in der Förderrichtung 19 eine Länge L_{M} auf, die der Länge L_{B} des Bodenabschnitts 59 entspricht. Quer zu der Förderrichtung 19 weist der Bodenabschnitt 59 eine Breite B_{B} auf, die derart ist, dass die Bodenabschnitte 59 der Seitenteile 55, 56 im montierten Zustand gegeneinander anliegen bzw. nur einen geringen Spalt ausbilden.

Die Seitenteile 55, 56 weisen ein Dämmmaterial 63 auf, das von einer Metallummantelung bzw. Edelstahlummantelung 64 umhüllt ist. An einer dem Oberteil 57 zugewandten Oberseite weisen die Seitenteile 55, 56 jeweils zwei Zapfen 65 auf, die mit der Metallummantelung 64 verschweißt sind.

Zur Befestigung der Seitenteile 55, 56 sind in dem jeweiligen Seitenabschnitt 58 mehrere erste Durchführungsöffnungen 66 ausgebildet. Die ersten Durchführungsöffnungen 66 werden durch erste Metallhülsen 67 gebildet bzw. begrenzt, die mit der Metallummantelung 64 verschweißt sind. Weiterhin weisen die Seitenteile 55, 56 im Bereich des jeweiligen Seitenabschnitts 58 mehrere zweite Durchführungsöffnungen 68 auf, die zur Durchführung der Heizpatronen dienen. Die zweiten Durchführungsöffnungen 68 werden durch zweite Metallhülsen 69 gebildet bzw. begrenzt, die wiederum mit der Metallummantelung 64 verschweißt sind. Die ersten Metallhülsen 67 enden an der Innenseite bündig mit der Metallummantelung 64, wohingegen die zweiten Metallhülsen 69 einen über die Innenseite der Metallummantelung 64 überstehenden Hülsenabschnitt 70 aufweisen, der quer zu der Förderrichtung 19 eine Länge L_{A} hat. Die Hülsenabschnitte 70 wirken als Abstandshalter für das jeweilige Seitenteil 55, 56.

Zur Durchführung von nicht näher dargestellten Extruderbauteilen, wie beispielsweise Messsensoren, weisen die Bodenabschnitte 59 an der dem jeweils benachbarten Seitenteil 55, 56 zugewandten Seite zwei rechteckige Durchführungsöffnungen 71 und eine dazwischen liegende halbkreisförmige Durchführungsöffnung 72 auf, die symmetrisch in dem Bodenabschnitt 59 ausgebildet sind.

Das Oberteil 57 weist einen rechteckförmigen Mittelabschnitt 73 auf, der von einem rahmenförmigen Flanschabschnitt 74 umgeben ist. Der Mittelabschnitt 73 weist in der Förderrichtung 19 eine Länge L_{O} auf, die der Länge L_{M} entspricht. Weiterhin weist der Mittelabschnitt 73 eine Dicke D_{O} auf, die im Vergleich zu einer Dicke D_{R} des Flanschabschnitts 74 größer ist. Die Dicke D_{O} entspricht der Dicke D_{B}. In den Ecken des Flanschabschnitts 74 sind Bohrungen 75 ausgebildet, die zusammen mit den Zapfen 65 eine Bohrung-Zapfen-Verbindung zur Fixierung des Oberteils 57 auf den Seitenteilen 55, 56 bilden. Zur Durchführung von Extruderbauteilen sind im Mittelabschnitt 73 zwei rechteckförmige Durchführungsöffnungen 76, 77 symmetrisch in dem Oberteil 57 ausgebildet. Entsprechend zu den Seitenteilen 55, 56 weist das Oberteil 57 ein Dämmmaterial 63 auf, das von einer Metallummantelung 64 umgeben ist.

Zur Montage der Wärmedämmhaube 54 an dem Gehäuseabschnitt 4 werden zunächst die Seitenteile 55, 56 befestigt. Hierzu werden in die Seitenwände 78, 79 des Gehäuseabschnitts 4 zunächst Befestigungsmittel in Form von Gewindestiften 80 eingeschraubt. Die Seitenteile 55, 56 werden mit den ersten Durchführungsöffnungen 66 über die Gewindestifte 80 geführt und mit Muttern 81 an den Seitenwänden 78 bzw. 79 befestigt, sodass die Seitenabschnitte 58 die Seitenwände 78, 79 und die Bodenabschnitte 59 eine untere Wand 82 des Gehäuseabschnitts 4 wärmedämmen. Die Mittelabschnitte 60 und die Bodenabschnitte 59 erstrecken sich im montierten Zustand in den Zwischenraum zwischen den Flanschen 8 und 9. Demgegenüber dämmen die Flanschabschnitte 61, 62 die Flansche 8, 9. Dadurch, dass die zweiten Metallhülsen 69 mit dem Hülsenabschnitt 70 über die Innenseite der Seitenteile 55, 56 überstehen, entsteht zwischen den Seitenwänden 78, 79 und dem zugehörigen Seitenteil 55, 56 ein Luftspalt 83, der den Gehäuseabschnitt 4 zusätzlich wärmedämmt. Anschließend wird das Oberteil 57 auf den Seitenteile 55, 56 angeordnet und mittels der in den Bohrungen 75 angeordneten Zapfen 65 auf diesen fixiert. Der Mittelabschnitt 73 erstreckt sich zwischen den Seitenteilen 55, 56 bis zu einer oberen Wand 84 des Gehäuseabschnitts 4 und dämmt diese. Über die Dicken D_{B} und D_{O} ist ein Luftspalt 85 zwischen den Bodenabschnitten 59 und der unteren Wand 82 bzw. zwischen dem Mittelabschnitt 73 und der oberen Wand 84 einstellbar.

Die Seitenteile 55, 56 und das Oberteil 57 sind somit als modularer Bausatz ausgebildet und können zur Wärmedämmung des Gehäuseabschnitts 4 aneinander angeordnet werden. Anschließend werden durch die zweiten Durchführungsöffnungen 68 des Seitenteils 55 die Heizpatronen der Heizeinheit 42 geführt. Weiterhin wird durch die Durchführungsöffnung 77 ein Extruderbauteil 86 in Form eines Temperatursensors in den Gehäuseabschnitt 4 geführt.

An dem Gehäuseabschnitt 6 ist eine entsprechende Wärmedämmhaube 54 angeordnet.

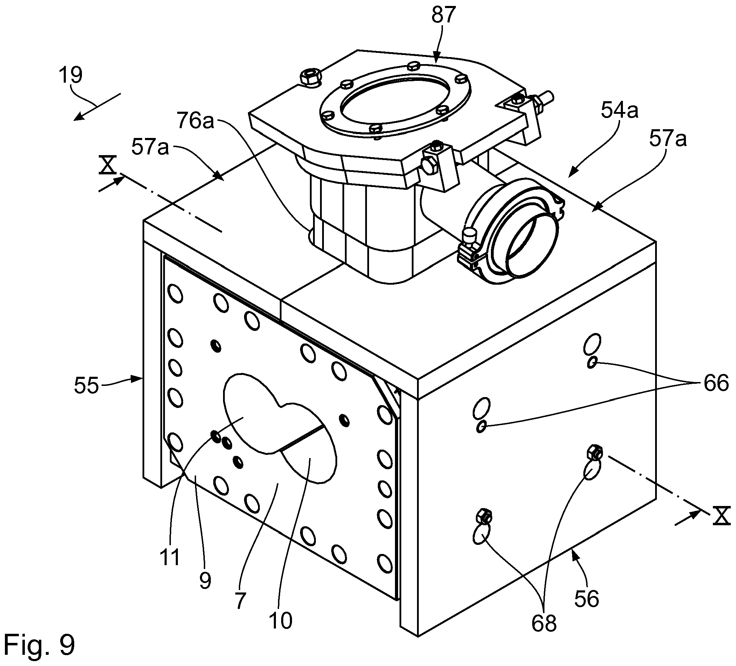

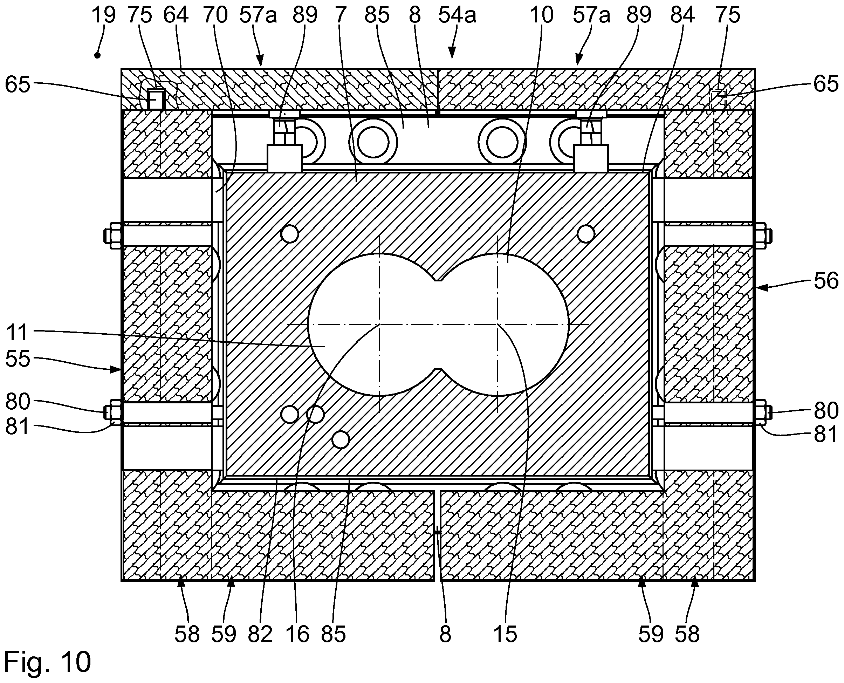

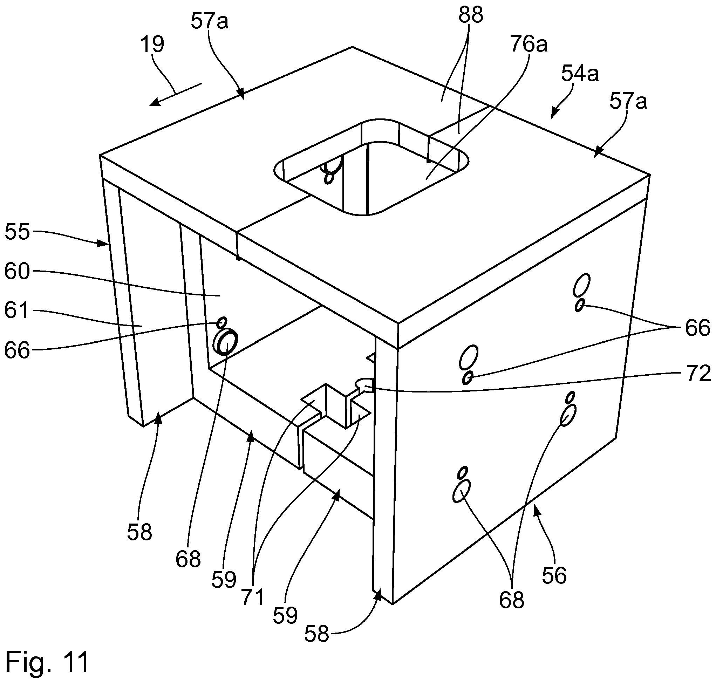

Nachfolgend ist anhand der Fig. 9 bis 11 eine zweite erfindungsgemäße Wärmedämmhaube 54a für die Gehäuseabschnitte 3 und 7 beschrieben. Die Wärmedämmhaube 54a weist zwei Seitenteile 55, 56 und zwei Oberteile 57a auf. Die Seitenteile 55, 56 der Wärmedämmhaube 54a entsprechen denen der Wärmedämmhaube 54. Die Oberteile 57a sind baugleich. Sie sind plattenförmig ausgebildet und begrenzen zusammen eine mittig ausgebildete Durchführungsöffnung 76a. Durch die Durchführungsöffnung 76a ist ein Extruderbauteil in Form einer Vakuumentgasungseinheit 87 geführt, die in die zweite Entgasungsöffnung 38 mündet.

Die Oberteile 57a weisen jeweils eine U-förmige Grundplatte 88 auf, die durch ein Dämmmaterial 63 gebildet wird, das von einer Metallummantelung 64 umhüllt ist. In den den Seitenteilen 55, 56 zugewandten Ecken sind die Bohrungen 75 für die zugehörigen Zapfen 65 angeordnet. An einer Unterseite der Grundplatten 88 sind Abstandshalter 89 befestigt, die im montierten Zustand des Oberteils 57a gegen die obere Wand 84 des Gehäuseabschnitts 7 aufliegen. Hierdurch wird zwischen der oberen Wand 84 und den Grundplatten 88 ein Luftspalt 85 ausgebildet.

Der Gehäuseabschnitt 3 ist mit einer entsprechenden Wärmedämmhaube 54a versehen und wärmegedämmt, wobei durch die Durchführungsöffnung 76a der Zuführtrichter 20 geführt ist.

Hinsichtlich der weiteren Funktionsweise der Wärmedämmhaube 54a wird auf die Beschreibung der Wärmedämmhaube 54 verwiesen.

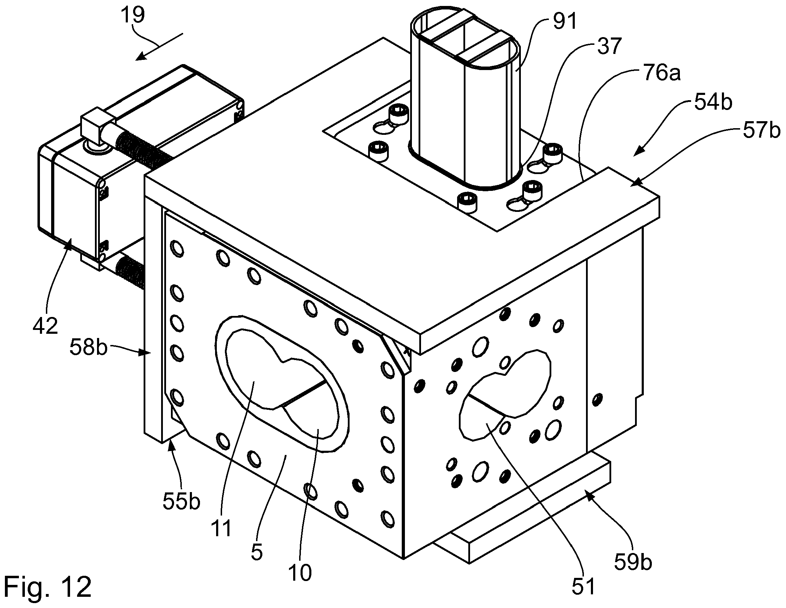

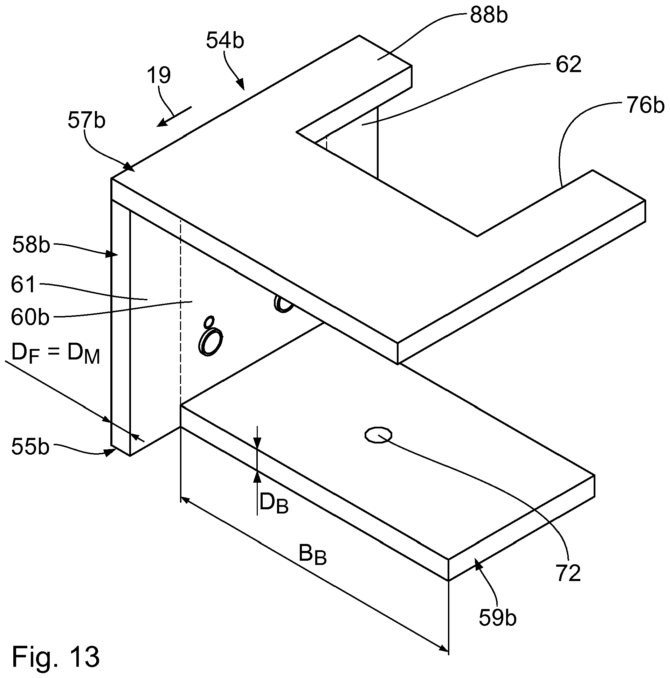

Nachfolgend ist anhand der Fig. 12 und 13 eine dritte nicht erfindungsgemäße Wärmedämmhaube beschrieben, die zur Wärmedämmung des Gehäuseabschnitts 5 an diesem angeordnet ist. Die Wärmedämmhaube 54b weist ein Seitenteil 55b und ein Oberteil 57b auf. Das Seitenteil 55b ist L-förmig ausgebildet. Im Unterschied zu dem Seitenteil 55 weist das Seitenteil 55b keinen im Vergleich zu den Flanschabschnitten 61, 62 verdickten Mittelabschnitt 60b auf. Die Breite B_{B} des Bodenabschnitts 59b erstreckt sich über die gesamte Breite des Gehäuseabschnitts 5, da aufgrund der Beschickungsschneckenmaschine 43 kein zweites Seitenteil vorhanden ist. Darüber hinaus ist der Bodenabschnitt 59b entsprechend dem Mittelabschnitt 60b dünner ausgebildet als bei der Wärmedämmhaube 54 bzw. 54a, da der Gehäuseabschnitt 5 keine Flansche aufweist. Mittig in dem Bodenabschnitt 59b ist die Zuführöffnung 72 ausgebildet. Hinsichtlich des weiteren Aufbaus des Seitenteils 55b wird auf die Beschreibung des Seitenteils 55 verwiesen.

Das Oberteil 57b weist eine U-förmige Grundplatte 88b auf, die an einem dem Gehäuseabschnitt 4 zugewandten Ende eine Durchführungsöffnung 76b aufweist. Durch die Durchführungsöffnung 76b ist als Extruderbauteil ein Entgasungsdom 91 geführt, der in die erste Entgasungsöffnung 37 mündet. An den auf dem Seitenteil 55b aufliegenden Ecken des Oberteils 57b sind die Bohrungen 75 für die Zapfen 65 angeordnet. Zusätzlich sind an der Unterseite des Oberteils 57b Abstandshalter 89 angeordnet, die im montierten Zustand gegen die obere Wand 84 des Gehäuseabschnitts 5 anliegen, sodass ein Luftspalt 85 entsteht. Hinsichtlich der weiteren Funktionsweise wird auf die Beschreibung der Wärmedämmhauben 54 und 54a verwiesen.

Aufgrund des modularen Aufbaus der Wärmedämmhauben 54, 54a, 54b können die Seitenteile 55, 56, 55b sowie die Oberteile 57, 57a, 57b beliebig miteinander kombiniert und zur Wärmedämmung von beliebigen Gehäuseabschnitten 3 bis 7 zusammengebaut werden. Die Durchführungsöffnungen 66, 68, 71, 72, 76, 76a, 76b, 77 der Wärmedämmhauben 54, 54a, 54b sind zunächst aufgrund der Metallummantelungen 64 verschlossen. Die Metallummantelungen 64 sind derart ausgebildet, dass ein den Durchführungsöffnungen 66, 68, 71, 72, 76, 76a, 76b, 77 entsprechender Teilbereich aus diesen herausbrechbar ist. Das darunter liegende Dämmmaterial 63 ist anschließend entfernbar oder in den entsprechenden Teilbereichen bereits ausgespart. Alternativ können die Durchführungsöffnungen 66, 68, 71, 72, 76, 76a, 76b, 77 bereits in den Seitenteilen 55, 56, 55b sowie den Oberteilen 57, 57a, 57b ausgebildet sein.

Dadurch, dass die Seitenteile 55, 56, 55b und die Oberteile 57, 57a, 57b einen modularen Bausatz für Wärmedämmhauben 54, 54a, 54b bilden, können diese an unterschiedliche Gehäuseabschnitte 3 bis 7 einfach und flexibel angepasst werden, sodass die Wärmedämmung des Gehäuses 2 optimiert wird.

## Patentansprüche

1. Mehrwellen-Extruder zur Behandlung von Kunststoffmaterial mit
- einem mehrere Gehäuseabschnitte (3 bis 7) aufweisenden Gehäuse (2), in dem mindestens zwei zueinander parallele und einander durchdringende Gehäusebohrungen (10, 11) ausgebildet sind,
- mindestens zwei in den Gehäusebohrungen (10, 11) konzentrisch angeordneten und um zugehörige Drehachsen (15, 16) drehantreibbaren Wellen (12, 13),
- mehreren Behandlungselementen (31 bis 36) zur Behandlung eines Kunststoffmaterials, die in Richtung der jeweiligen Drehachse (15, 16) hintereinander auf den mindestens zwei Wellen (12, 13) drehfest angeordnet und miteinander dicht kämmend ausgebildet sind,
- mindestens einer Wärmedämmhaube (54; 54a; 54b), wobei jede Wärmedämmhaube (54; 54a; 54b) an einem der Gehäuseabschnitte (4, 6; 3, 7; 5) angeordnet ist und mindestens ein Oberteil (57; 57a; 57b) zur Wärmedämmung einer oberen Wand (84) des Gehäuseabschnitts (4, 6; 3, 7; 5) und mindestens ein Seitenteil (55, 56; 55b) zur Wärmedämmung einer Seitenwand (78, 79) des Gehäuseabschnitts (4, 6; 3, 7; 5) derart aufweist, dass das mindestens eine Oberteil (57; 57a; 57b) und das mindestens eine Seitenteil (55, 56; 55b) als modularer Bausatz ausgebildet sind und zur Wärmedämmung des Gehäuseabschnitts (4, 6; 3, 7; 5) lösbar aneinander angeordnet sind,
wobei eine erste Wärmedämmhaube (54) genau ein Oberteil (57) zur Wärmedämmung der oberen Wand (84) des zugehörigen Gehäuseabschnitts (4, 6) und genau zwei Seitenteile (55, 56), die zur Wärmedämmung der Seitenwände (78, 79) und einer unteren Wand (82) des zugehörigen Gehäuseabschnitts (4, 6) im Querschnitt L-förmig ausgebildet sind, umfasst, und
wobei eine zweite Wärmdämmhaube (54a) genau zwei Oberteile (57a) zur Wärmedämmung der oberen Wand (84) des zugehörigen Gehäuseabschnitts (3, 7), die eine Durchführungsöffnung (76a) für ein Extruderbauteil (87) ausbilden, und genau zwei Seitenteile (55, 56), die zur Wärmedämmung der Seitenwände (78, 79) und einer unteren Wand (82) des zugehörigen Gehäuseabschnitts (82) im Querschnitt L-förmig ausgebildet sind, umfasst.

2. Mehrwellen-Extruder nach Anspruch 1, **dadurch gekennzeichnet, dass** das mindestens eine Seitenteil (55, 56; 55b) im Querschnitt L-förmig ausgebildet ist und zur Wärmedämmung einer unteren Wand (82) des Gehäuseabschnitts (4, 6; 3, 7; 5) einen Bodenabschnitt (59; 59b) aufweist, der einteilig an einem Seitenabschnitt (58; 58b) angeordnet ist.

3. Mehrwellen-Extruder nach Anspruch 1 oder 2, **dadurch gekennzeichnet, dass**
das mindestens eine Seitenteil (55, 56) einen Mittelabschnitt (60) und zwei seitlich davon angeordnete Flanschabschnitte (61, 62) aufweist, wobei der Mittelabschnitt (60) im Vergleich zu den Flanschabschnitten (61, 62) eine größere Dicke (D_{M}) hat.

4. Mehrwellen-Extruder nach einem der Ansprüche 1 bis 3, **dadurch gekennzeichnet, dass**
das mindestens eine Oberteil (57) einen Mittelabschnitt (73) und einen diesen umgebenden Flanschabschnitt (74) aufweist, wobei der Mittelabschnitt (73) im Vergleich zu dem Flanschabschnitt (74) eine größere Dicke (Do) hat.

5. Mehrwellen-Extruder nach einem der Ansprüche 1 bis 4, **dadurch gekennzeichnet, dass**
das mindestens eine Seitenteil (55, 56; 55b) zur Befestigung an einem der Gehäuseabschnitte (4, 6; 3, 7; 5) mehrere erste Durchführungsöffnungen (66) für Befestigungsmittel (80) aufweist, wobei die ersten Durchführungsöffnungen (66) insbesondere durch erste Metallhülsen (67) gebildet werden, die mit einer Metallummantelung (64) des mindestens einen Seitenteils (55, 56; 55b) verbunden sind.

6. Mehrwellen-Extruder nach einem der Ansprüche 1 bis 5, **dadurch gekennzeichnet, dass**
das mindestens eine Seitenteil (55, 56; 55b) zur Durchführung von Heizpatronen einer Heizeinheit (42) mehrere zweite Durchführungsöffnungen (68) aufweist, wobei die zweiten Durchführungsöffnungen (68) insbesondere durch zweite Metallhülsen (69) gebildet werden, die mit einer Metallummantelung (64) des mindestens einen Seitenteils (55, 56; 56b) verbunden sind.

7. Mehrwellen-Extruder nach einem der Ansprüche 1 bis 6, **dadurch gekennzeichnet, dass**
das mindestens eine Oberteil (57; 57a; 57b) zur Durchführung eines Extruderbauteils (86; 87; 91) eine dritte Durchführungsöffnung (76, 77; 76a; 76b) aufweist.

8. Mehrwellen-Extruder nach einem der Ansprüche 1 bis 7, **dadurch gekennzeichnet, dass**
das mindestens eine Seitenteil (55, 56; 55b) zur Ausbildung eines Luftspalts (83) zwischen dem mindestens einen Seitenteil (55, 56; 55b) und dem Gehäuseabschnitt (4, 6; 3, 7; 5) an seiner Innenseite einen Abstandshalter (70) aufweist, wobei der Abstandshalter (70) insbesondere durch mindestens eine der Metallhülsen (69) gebildet wird.

9. Mehrwellen-Extruder nach einem der Ansprüche 1 bis 8, **dadurch gekennzeichnet, dass**
das mindestens eine Oberteil (57; 57a; 57b) und das mindestens eine Seitenteil (55, 56; 55b) mittels einer Bohrung-Zapfen-Verbindung (65, 75) lösbar miteinander verbunden sind.

10. Mehrwellen-Extruder nach einem der Ansprüche 1 bis 9, **dadurch gekennzeichnet, dass**
das mindestens eine Oberteil (57; 57a; 57b) und das mindestens eine Seitenteil (55, 56; 55b) jeweils ein Dammmaterial (63) aufweisen, das von einer Metallummantelung (64), insbesondere von einer Edelstahlummantelung, umhüllt ist.

11. Mehrwellen-Extruder nach Anspruch 10, **dadurch gekennzeichnet, dass**
mindestens eine der Metallummantelungen (64) einen herausbrechbaren Teilbereich zur Ausbildung einer Durchführungsöffnung (66, 68, 71, 72, 76, 77; 66, 68, 71, 72, 76a; 66, 68, 72, 76b) aufweist.

12. Mehrwellen-Extruder nach einem der Ansprüche 1 bis 11, **gekennzeichnet durch**
eine dritte Wärmedämmhaube (54b) mit
- genau einem Oberteil (57b) zur Wärmedämmung der oberen Wand (84) eines der Gehäuseabschnitte (5), und
- genau einem Seitenteil (55b), das zur Wärmedämmung der Seitenwand (78) und einer unteren Wand (82) eines der Gehäuseabschnitte (5) im Querschnitt L-förmig ausgebildet ist.

## Claims

1. Multi-screw extruder for treating plastics material, with
- a housing (2) which has a plurality of housing portions (3 to 7) and in which at least two housing bores (10, 11) which are parallel to each other and penetrate each other are formed,
- at least two shafts (12, 13) which are arranged concentrically in the housing bores (10, 11) and are rotationally drivable about associated axes of rotation (15, 16),
- a plurality of treatment elements (31 to 36) for treating a plastics material, said treatment elements being arranged one behind another in the direction of the respective axis of rotation (15, 16) on the at least two shafts (12, 13) for rotation therewith and being formed so as to tightly mesh with one another,
- at least one heat-insulating hood (54; 54a; 54b), wherein each heat-insulating hood (54; 54a; 54b) is arranged on one of the housing portions (4, 6; 3, 7; 5) and has at least one upper part (57; 57a; 57b) for the heat insulation of an upper wall (84) of the housing portion (4, 6; 3, 7; 5) and at least one side part (55, 56; 55b) for the heat insulation of a side wall (78, 79) of the housing portion (4, 6; 3, 7; 5) in such a manner that the at least one upper part (57; 57a; 57b) and the at least one side part (55, 56; 55b) are designed as a modular construction kit and are arranged releasably on one another for the heat insulation of the housing portion (4, 6; 3, 7; 5),
wherein a first heat-insulating hood (54) comprises precisely one upper part (57) for the heat insulation of the upper wall (84) of the associated housing portion (4, 6) and precisely two side parts (55, 56) which are of L-shaped design in cross section for the heat insulation of the side walls (78, 79) and of a lower wall (82) of the associated housing portion (4, 6), and wherein a second heat-insulating hood (54a) comprises precisely two upper parts (57a) for the heat insulation of the upper wall (84) of the associated housing portion (3, 7), said upper parts forming a passage opening (76a) for an extruder component (87), and precisely two side parts (55, 56) which are of L-shaped design in cross section for the heat insulation of the side walls (78, 79) and of a lower wall (82) of the associated housing portion (82).

2. Multi-screw extruder according to Claim 1, **characterized in that** the at least one side part (55, 56; 55b) is of L-shaped design in cross section and, for the heat insulation of a lower wall (82) of the housing portion (4, 6; 3, 7; 5), has a base portion (59; 59b) which is arranged integrally on a side portion (58; 58b).

3. Multi-screw extruder according to Claim 1 to 2, **characterized in that** the at least one side part (55, 56) has a central portion (60) and two flange portions (61, 62) arranged laterally thereof, wherein the central portion (60) has a greater thickness (D_{M}) than the flange portions (61, 62).

4. Multi-screw extruder according to one of Claims 1 to 3, **characterized in that** the at least one upper part (57) has a central portion (73) and a flange portion (74) surrounding the latter, wherein the central portion (73) has a greater thickness (D_{O}) than the flange portion (74).

5. Multi-screw extruder according to one of Claims 1 to 4, **characterized in that**, for the fastening to one of the housing portions (4, 6; 3, 7; 5), the at least one side part (55, 56; 55b) has a plurality of first passage openings (66) for fastening means (80), wherein the first passage openings (66) are formed in particular by first metal sleeves (67) which are connected to a metal casing (64) of the at least one side part (55, 56; 55b).

6. Multi-screw extruder according to one of Claims 1 to 5, **characterized in that**, for the passage of heating cartridges of a heating unit (42), the at least one side part (55, 56; 55b) has a plurality of second passage openings (68), wherein the second passage openings (68) are formed in particular by second metal sleeves (69) which are connected to a metal casing (64) of the at least one side part (55, 56; 56b).

7. Multi-screw extruder according to one of Claims 1 to 6, **characterized in that**, for the passage of an extruder component (86; 87; 91), the at least one upper part (57; 57a; 57b) has a third passage opening (76, 77; 76a; 76b).

8. Multi-screw extruder according to one of Claims 1 to 7, **characterized in that**, for the formation of an air gap (83) between the at least one side part (55, 56; 55b) and the housing portion (4, 6; 3, 7; 5), the inner side of the at least one side part (55, 56; 55b) has a spacer (70), wherein the spacer (70) is formed in particular by at least one of the metal sleeves (69).

9. Multi-screw extruder according to one of Claims 1 to 8, **characterized in that** the at least one upper part (57; 57a; 57b) and the at least one side part (55, 56; 55b) are releasably connected to each other by means of a bore and pin connection (65, 75).

10. Multi-screw extruder according to one of Claims 1 to 9, **characterized in that** the at least one upper part (57; 57a; 57b) and the at least one side part (55, 56; 55b) each have an insulating material (63) which is encased by a metal casing (64), in particular by a stainless steel casing.

11. Multi-screw extruder according to Claim 10, **characterized in that** at least one of the metal casings (64) has a partial region which can be broken out, for forming a passage opening (66, 68, 71, 72, 76, 77; 66, 68, 71, 72, 76a; 66, 68, 72, 76b).

12. Multi-screw extruder according to one of Claims 1 to 11, **characterized by** a third heat-insulating hood (54b) with
- precisely one upper part (57b) for the heat insulation of the upper wall (84) of one of the housing portions (5), and
- precisely one side part (55b) which is of L-shape design in cross section for the heat insulation of the side wall (78) and of a lower wall (82) of one of the housing portions (5).

## Revendications

1. Extrudeuse à plusieurs vis permettant de traiter une matière plastique, comprenant
- un logement (2) comprenant plusieurs parties de logement (3 à 7) et dans lequel sont ménagés au moins deux trous de logement (10, 11) parallèles l'un à l'autre et se traversant mutuellement,
- au moins deux vis (12, 13) agencées de manière concentrique dans les trous de logement (10, 11) et pouvant être entraînées en rotation autour d'axes de rotation (15, 16) associés,
- plusieurs éléments de traitement (31 à 36) permettant de traiter une matière plastique, qui sont agencés solidaires en rotation les uns derrière les autres sur lesdites au moins deux vis (12, 13) en direction de l'axe de rotation (15, 16) respectif et qui s'engrènent de manière étanche les uns avec les autres,
- au moins un capot d'isolation thermique (54 ; 54a ; 54b), dans laquelle chaque capot d'isolation thermique (54 ; 54a ; 54b) est agencé sur une des parties de logement (4, 6 ; 3, 7 ; 5) et comprend au moins une partie supérieure (57 ; 57a ; 57b) permettant l'isolation thermique d'une paroi supérieure (84) de la partie de logement (4, 6 ; 3, 7 ; 5) et au moins une partie latérale (55, 56 ; 55b) permettant l'isolation thermique d'une paroi latérale (78, 79) de la partie de logement (4, 6 ; 3, 7 ; 5), de telle manière que ladite au moins une partie supérieure (57 ; 57a ; 57b) et ladite au moins une partie latérale (55, 56 ; 55b) sont réalisées sous la forme d'un kit modulaire et, pour l'isolation thermique de la partie de logement (4, 6 ; 3, 7 ; 5), sont agencées les unes contre les autres de manière détachable,
dans laquelle un premier capot d'isolation thermique (54) comporte exactement une partie supérieure (57) pour l'isolation thermique de la paroi supérieure (84) de la partie de logement (4, 6) associée et exactement deux parties latérales (55, 56), qui, pour l'isolation thermique des parois latérales (78, 79) et d'une paroi inférieure (82) de la partie de logement (4, 6) associée, sont conçues en forme de L en section transversale, et
dans laquelle un deuxième capot d'isolation thermique (54a) comporte exactement deux parties supérieures (57a) pour l'isolation thermique de la paroi supérieure (84) de la partie de logement (3, 7) associée, qui constituent une ouverture de passage (76a) pour un élément d'extrusion (87), et exactement deux parties latérales (55, 56), qui, pour l'isolation thermique des parois latérales (78, 79) et d'une paroi inférieure (82) de la partie de logement (82) associée, sont conçues en forme de L en section transversale.

2. Extrudeuse à plusieurs vis selon la revendication 1, **caractérisée en ce que** ladite au moins une partie latérale (55, 56 ; 55b) est conçue en forme de L en section transversale et, pour l'isolation thermique d'une paroi inférieure (82) de la partie de logement (4, 6 ; 3, 7 ; 5), comprend une partie de fond (59 ; 59b) qui est agencée d'une seule pièce sur une partie latérale (58 ; 58b).

3. Extrudeuse à plusieurs vis selon la revendication 1 ou 2, **caractérisée en ce que**
ladite au moins une partie latérale (55, 56) comprend une partie centrale (60) et deux parties de bride (61, 62) agencées de part et d'autre de celle-ci, dans laquelle la partie centrale (60) présente une épaisseur (D_{M}) plus élevée par rapport aux parties de bride (61, 62).

4. Extrudeuse à plusieurs vis selon l'une quelconque des revendications 1 à 3, **caractérisée en ce que**
ladite au moins une partie supérieure (57) comprend une partie centrale (73) et une partie de bride (74) entourant celle-ci, dans laquelle la partie centrale (73) présente une épaisseur (D_{O}) plus élevée par rapport à la partie de bride (74).

5. Extrudeuse à plusieurs vis selon l'une quelconque des revendications 1 à 4, **caractérisée en ce que**
ladite au moins une partie latérale (55, 56 ; 55b), pour la fixation sur une des parties de logement (4, 6 ; 3, 7 ; 5), comprend plusieurs premières ouvertures de passage (66) pour des moyens de fixation (80), dans laquelle les premières ouvertures de passage (66) sont formées en particulier par des premiers manchons métalliques (67), qui sont reliés à une enveloppe métallique (64) de ladite au moins une partie latérale (55, 56 ; 55b).

6. Extrudeuse à plusieurs vis selon l'une quelconque des revendications 1 à 5, **caractérisée en ce que**
ladite au moins une partie latérale (55, 56 ; 55b), pour le passage de cartouches chauffantes d'une unité de chauffage (42), comprend plusieurs deuxièmes ouvertures de passage (68), dans laquelle les deuxièmes ouvertures de passage (68) sont formées en particulier par des deuxièmes manchons métalliques (69), qui sont reliés à une enveloppe métallique (64) de ladite au moins une partie latérale (55, 56 ; 56b).

7. Extrudeuse à plusieurs vis selon l'une quelconque des revendications 1 à 6, **caractérisée en ce que**
ladite au moins une partie supérieure (57 ; 57a ; 57b), pour le passage d'un élément d'extrusion (86 ; 87 ; 91), comprend une troisième ouverture de passage (76, 77 ; 76a ; 76b).

8. Extrudeuse à plusieurs vis selon l'une quelconque des revendications 1 à 7, **caractérisée en ce que**
ladite au moins une partie latérale (55, 56 ; 55b), pour la formation d'un entrefer (83) entre ladite au moins une partie latérale (55, 56 ; 55b) et la partie de logement (4, 6 ; 3, 7 ; 5), comprend sur une face intérieure une entretoise (70), dans laquelle l'entretoise (70) est formée en particulier par au moins un des manchons métalliques (69).

9. Extrudeuse à plusieurs vis selon l'une quelconque des revendications 1 à 8, **caractérisée en ce que**
ladite au moins une partie supérieure (57 ; 57a ; 57b) et ladite au moins une partie latérale (55, 56 ; 55b) sont reliées de manière détachable entre elles au moyen d'une liaison à trou et à tourillon (65, 75).

10. Extrudeuse à plusieurs vis selon l'une quelconque des revendications 1 à 9, **caractérisée en ce que**
ladite au moins une partie supérieure (57 ; 57a ; 57b) et ladite au moins une partie latérale (55, 56 ; 55b) comprennent respectivement un matériau isolant (63), qui est entouré par une enveloppe métallique (64), en particulier par une enveloppe en acier inoxydable.

11. Extrudeuse à plusieurs vis selon la revendication 10, **caractérisée en ce que**
au moins une des enveloppes métalliques (64) comprend une zone partielle détachable pour ménager une ouverture de passage (66, 68, 71, 72, 76, 77 ; 66, 68, 71, 72, 76a ; 66, 68, 72, 76b).

12. Extrudeuse à plusieurs vis selon l'une quelconque des revendications 1 à 11, **caractérisée par**
un troisième capot d'isolation thermique (54b) comprenant
- exactement une partie supérieure (57b) pour l'isolation thermique de la paroi supérieure (84) d'une des parties de logement (5), et
- exactement une partie latérale (55b), qui, pour l'isolation thermique de la paroi latérale (78) et d'une paroi inférieure (82) d'une des parties de logement (5), est conçue en forme de L en section transversale.
